Europäisches Patentamt

European Patent Office

Office européen des brevets

(19)

(11) Publication number: **0 202 788 B1**

(12) **EUROPEAN PATENT SPECIFICATION**

(45) Date of publication of patent specification: **20.03.91**  (51) Int. Cl.5: **B60C 11/00**, B60C 3/04

(21) Application number: **86303082.1**

(22) Date of filing: **24.04.86**

(54) Tyre.

(30) Priority: **24.04.85 JP 89514/85**

(43) Date of publication of application:
**26.11.86 Bulletin 86/48**

(45) Publication of the grant of the patent:
**20.03.91 Bulletin 91/12**

(84) Designated Contracting States:
**DE FR GB**

(56) References cited:
EP-A- 0 194 108      EP-A- 0 197 735
EP-A- 0 205 233      DE-A- 1 912 598
DE-A- 2 541 504      FR-A- 2 499 473
FR-A- 2 557 513

INTERNATIONAL POLYMER SCIENCE AND
TECHNOLOGY, vol. 3, no. 3, 1976, page T/40,
Shrewsbury, GB; G.V. NADEZHDIN et al.:
"The influence of division of tread pattern
on tyre wear"

(73) Proprietor: **SUMITOMO RUBBER INDUSTRIES
LIMITED**
**No. 1-1, Tsutsui-cho 1-chome**
**Chuo-ku Kobe-shi Hyogo 651(JP)**

(72) Inventor: **Fujiwara, Kenichi**
**27 Nishijiyuugaoka 2-Chome Shijimicho**
**Miki-shi Hyogo-ken(JP)**

(74) Representative: **Stewart, Charles Geoffrey
SP TYRES UK LIMITED Tyre Technical Division
Fort Dunlop Birmingham B24 9QT(GB)**

EP 0 202 788 B1

## Description

This invention relates to a pneumatic radial ply tyre and in particular to a radial tyre suitable for use for truck, bus, light truck, and other vehicles.

One object is to provide an improved radial tyre, in which various requirements for this kind of tyre are improved resistance to cutting, resistance to wear, durability in high speed running, low fuel consumption, and vehicle driving stability are well-balanced with each other and also with good other general characteristics necessary for these tyres such as vehicle ride comfort and traction capacity.

In the prior art to obtain resistance of tyres to wear and cutting, durability in high speed running, and savings in fuel consumption, means have been used such as the use of rubber highly resistant to wear and cutting for the ground contacting part of the tread, the use of rubber material low in gripping performance but high resilience, or employment of a tread of small gauge. However, there have been severe problems with such means because they are antinomic to each other in that a tyre designed to be specially good in regard to resistance to wear and long life, is usually very poor in durability in high speed running and in fuel consumption. Alternative tyres designed for durability in high speed running and providing low fuel consumption are inevitably handicapped by short life because of rapid wear. In the applicant's EP-A-205233 (published 17.12.86 and cited under Art.54(3)EPC) is disclosed a tyre according to the preamble of claim 1.

In the applicant's co-pending European Application EP-A-0194 108 (published 10.9.86 and cited under Art.54(3)EPC) is disclosed a tyre having a carcass profile characterised in that the radius TR1 of the radially outer tread surface when the tyre is mounted on the rim officially specified for use and inflated with air at 5% of the specified maximum pressure, and the radius TR2 of the curvature when the tyre is inflated with air to the specified maximum pressure satisfy the relationship $1.2 \leq TR2/TR1 \leq 1.5$, and the above-mentioned radius TR1 of curvature increases with increasing air pressure.

It is an object of the present invention to still further improve the above mentioned tyres to provide an improvement in resistance of the tread crown part to cutting and wear, durability of the tyre in high speed running, savings of fuel consumption, and driving stability without decreasing comfort in vehicle ride or the traction capacity of the tyre.

According to the present invention a pneumatic radial ply tyre comprising a carcass reinforced by a carcass ply of radially disposed substantially inextensible reinforcement cords and a tread reinforced by a belt layer (3) comprising at least two layers of plies, each comprising parallel cords, the cords of one cord ply being crosswise to the adjacent ply and laid at an angle of $10°$-$70°$ to the circumferential direction of the tyre having a pattern formed by a crown part and a shoulder part, the crown part having a width of 30 to 65% of the tread width and being central of the tread and the shoulder parts being separated from the crown part, each by a circumferentially extending deep groove, the shoulder parts comprising a plurality of narrow grooves extending transversely of the tread providing a circumferential stiffness index for the tread pattern in the range 30 to 70, and a volume index for the narrow cut groove in the range of 2.5 to 15 where the circumferential stiffness index is

$$\frac{\text{Total Pattern Stiffness (Kpt)}}{\text{Pattern stiffness with no subgrooves (Kpo)}} \times 100$$

where

$$Kpt = 1 / \left\{ \frac{1}{Kps} + \frac{1}{Kpb} \right\}$$

and Kps is the total pattern stiffness of the surface of the tread and Kpb is the pattern stiffness at the base of the tread where pattern stiffness is

$$Kp = 1 / \left\{ \frac{h^3}{3EI} + \frac{h}{AG} \right\}$$

where

h = pattern depth (mm)

E = elastic modulus at elongation of tread rubber (Kg mm²)

G   = shear modulus = E/3 (Kg/mm$^2$)

I   = secondary moment at block section (mm$^4$)

A   = sectional area of block (mm$^2$)

and where the volume index of the narrow cut groove is

$$\frac{\text{Volume of cut grooves in shoulder part}}{\text{Surface area of shoulder part} \times \text{Pattern depth}} \times 100$$

is characterised in that the radius TR1 of the radially outer surface of the tread when the tyre is mounted on the rim officially specified for the tyre and inflated to 5% of the specified maximum pressure and the radius TR2 when the tyre is inflated to the maximum pressure satisfy the relationship 1.2 ≤ TR2/TR1 ≤ 1.5, the radius TR1 of the outer surface of the tread increasing with increasing air pressure.

Preferably the narrow grooves have a width of not more than 6mm and they are preferably also spaced apart by between 0.1 and 1.1% of the circumference of the tyre at the centre of the tread. The narrow grooves may be at 0 ° to 45 ° to the direction of the tyre axial direction.

The central region and the shoulder regions may each comprise tread ribs or blocks.

Further aspects of the invention will be apparent from the following description by way of example only, of some enbodiments and comparative prior art examples in conjunction with the attached diagramatic drawings in which:-

Fig.1. and Fig. 10 are a schematic radial section and a plan view of the tread surface pattern of one embodiment of a tyre according to this invention, respectively, in Fig.1 the continious line and the dotted line indicate the profile the carcass line when the tyre is inflated to the specified maximum internal air pressure and that when the tyre is in the state before inflation (filled with air pressure of 5% to the said maximum internal air pressure), respectively, and the alternate long and short dash line indicating a base line of a caracss profile in the free balanced state;

Fig.2. is a view showing a cross-sectional structure of a steel radial tyre intended to be used for a truck or bus;

Fig.3 is a sectional view showing a deformed state of profile of a tyre according to this invention when the tyre is inflated to the specified maximum pressure;

Fig.4 is a sectional view showing a deformed state of profile of a conventional tyre when the tyre is inflated with air to the specified maximum pressure;

Fig.5 is a sectional view of the carcass profile of the tyres presented for testing;

Fig.6 is a view of the mechanism of a machine and a jig for testing resistance of the tread to cutting;

Fig.7 is a curvilinear diagram showing the load-deflection characteristics of tyres;

Fig.8 is a curvilinear diagram showing the cornering force at every degree of slip angle;

Fig.9 is a curvilinear diagram showing the relation of speed to rolling resistance;

Fig.11 and 12 are radial cross sections taken on the line A1-A1 and A2-A2 in Fig. 10;

Fig.13(a) is a developed view of a pattern in which the index of circumferential stiffness satisfies a value specified by this invention but the index of groove volume is out of the scope of the invention;

Fig.13(b) is a developed view of a tread pattern provided with transverse grooves in the shoulder region according to the prior art;

Fig.13(c) is a view showing an example of a pattern in which the transverse stiffness is lower than the circumferential stiffness;

Fig.14 is a graph showing the relationship of rubber gauge to heat generation in the shoulder region with respect to the pattern of the Example of this invention (shown in Fig.10), that of the Control Example (shown in Figs. 13(a) and 13(b), and that of a conventional tyre;

Fig.15 is a graph showing the relationship between the pattern circumferential stiffness and the temperature in the shoulder region;

Fig.16 is a graph showing the relationship between the volumes of the cut grooves and temperature;

Fig.17 is a graph showing the relationship between the circumferentail stiffness and the transverse stiffness;

Fig.18 is a graph showing the relationship between the transverse stiffness and the temperature in the shoulder region;

Fig.19 is a graph showing the relationship between the patter stiffness and the volume of groove;

Fig.20 is a view of a treadblock for describing the secondary moment of the pattern stiffness index at the section of the block;

Fig.21 is a plan view of a tread surface pattern of other embodiment of a tyre according to this invention;

A pneumatic radial ply tyre as claim comprises a tread reinforced by a carcass layer composed of at least a single layer of ply consisting of inextensible or low extensibility cords arranged substantially to lie in the radial direction and with the cords parallel with each other, and a belt layer composed of at least two layers of plies, each consisting of cords, arranged between the carcass layer and the tread rubber, adjacent to the carcass layer, the cord of each ply are small angle to the direction of the tyre circumference, and are parallel with the other cords in each ply. The cords of one ply are crossed to the cords of the other ply.

The tread has a surface having a cross sections when the tyre is mounted on the rim officially specified for use and inflated with air to 5% of the specified maximum pressure and the tread has another radius TR2 of curvature when the tyre is inflated with air to the full specified maximum pressure. The radii and construction are such that the radii always satisfy the relationship $1.2 \leqslant TR2 / TR1 \leqslant 1.5$. Furthermore the radius of curvature of the profile increases with an increase in air pressure,

For the ground contacting tread pattern the rubber surface of the tread is divided by two main deep vertical grooves running around the tyre circumference in the shape of a zigzag, a wavy line, or a straight line into a tread crown part having a width corresponding to about 30 to 65% of the tread width and central of the equatorial plane of the tyre and into tread shoulder parts or regions lying on both sides outside the tread crown parts. One or more central ribs or rows of central blocks comprising blocks in various shapes are provided in the crown part whereas outer ribs or outer rows of blocks are provided in both shoulder parts; and a plurality of narrow cut grooves running in the radial direction of the tyre are provided for the ribs or the blocks in both shoulder parts so that the circumferential stiffness index of the pattern and the volume index of the cut grooves is between 30 and 70 and 2.5 and 15, respectively. The cut grooves are equal to or smaller than the vertical main groove in depth and are not greater than 6mm in width, preferably within the range of 1 to 3mm, The circumferential pitch between the cut groovesis in the range of 1.1 to 0.1% preferably 0.6 to 0.3% of the circumference of the tyre at the centre of the tread when inflated to normal maximum inner pressure.

Usually radial ply tyre for truck or bus having the size of 10.00R20 14PR which is typical for this kind of tyre is provided with a tread having a radius of curvature ranging from 400 to 600mm under no load and a width from 180 to 200mm when moulded on the rim of 7.50 x 20 and inflated with air to the normal maximum pressure of 7.25 kg/cm². 

To obtain an even distribution of ground contact pressure to provide adequate grip and uniform wear, the radius of curvature of the radially expansive surface of the tread should be as large as possible. It has been known from the past that the tread is preferably provided with a flat profile by means of a large radius of curvature.

However, more important to obtain not only excellent resistance of the tyre to wear and cutting but also fuel saving and driving stability even with a large absolute value of a radius of curvature of the tread, the tread profile is designed to have a radius of curvature so that compressive strain, not tensile strain, is caused to act within the tread crown region when the tyre is inflated with air to the specified maximum pressure. Such designs enable the maintening of the transverse stiffness of the tread at a high level throughout the use of the tyre and, therefore, giving no disadvantage in vehicle drivability and driving stability. Similarly, wet grip performance and traction capacity are improved because of the increase in stiffness of the tread.

With reference to the drawings, an embodiment of this invention will now be described in more detail.

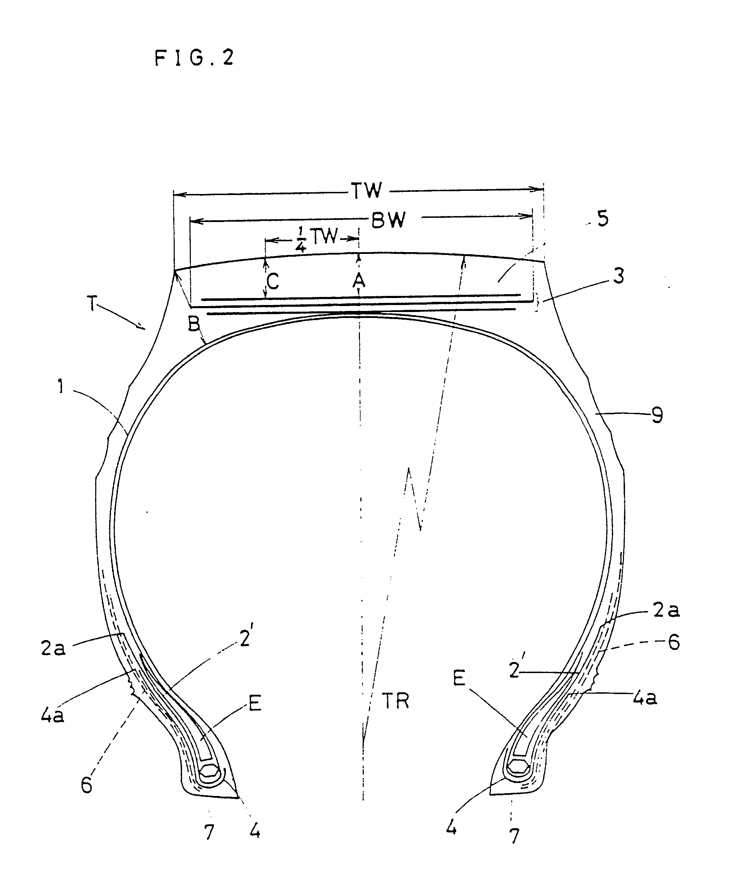

The tyre T comprises, as shown in Fig.2: a carcass reinforced by a least one single ply composed of carcass cords, for example, steel cords, extending substabtially radially. A tread 5 is reinforced by a belt structure 3 comprising a plurality of plies consisting of low extensibility or non extensible cords, these plies being arranged at bias angle, for example, an angle within the range of 10° to 70°, with respect to the direction of the tyre, circumference. Adjacent plies have their cords adapted to intersect with the cords of the next ply. A pair of bead cores 7 also provide with both ends wrapped around the beadcore 7 of the carcass ply (1) from inside to outside for fixation. A pair of sidewalls 9 completes the tyre.

It is preferable that the width BW of the belt structure 3 reinforcing the tyre tread ranges from 80 to 95% of the width TW of the tread 5 so that the tread may be widely and surely supported and reinforced. Further, the formation of a belt layer with cords crossing the cords of adjacent plies giva a triangular pattern advantageous to increases the stiffness of the belt and the reinforcement of the tread. That is to say, it is preferable for increasing the stiffness of the belt structure that at least three plies each composed of non extensible or low extensibility cords are stacked so as to be in direct contact with each other wherein the adjacent two plies are arranged at bias angle equal in degree but directionally opposite to each other. preferably each at angles ranging from 10 to 25°, with respect to the equatorial plane of the tyre, and the

4

cords of the third ply being set at an angle larger than that provided by the cords of the former two plies, for example, within the range of 40° to 70° with respect to the above mentioned equatorial plane.

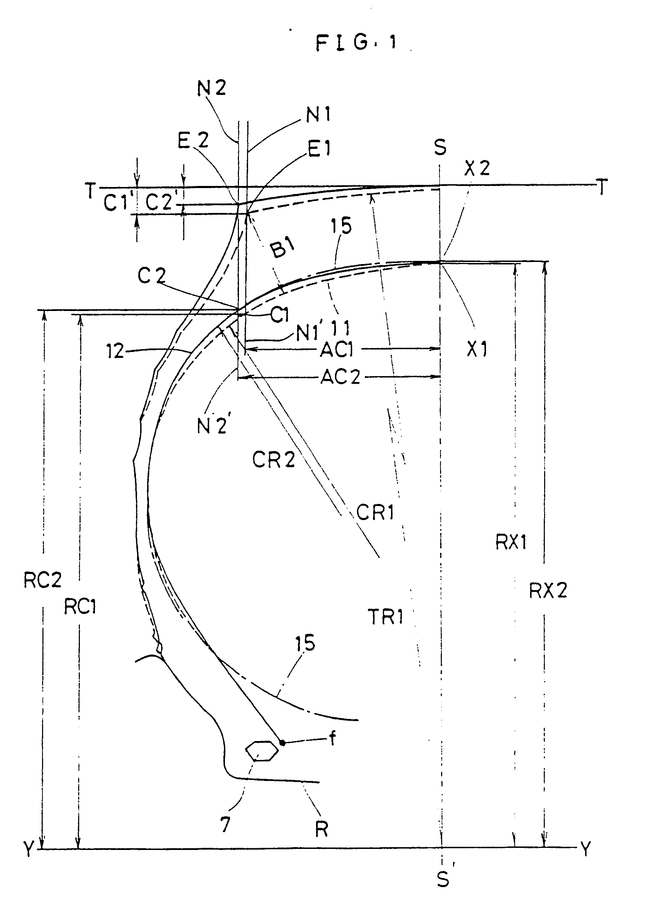

On the assumption that the belt layer is a highly stiff structure as above, the inventor of this invention, after examining in various ways a carcass line which is arranged on the side of the tyre axis adjacent to the belt layer and closely related to the radius of tread curvature when the tyre is inflated, found that, as shown in Fig.1; the carcass parts at the crown part are firmly bound by the effect of the stiff belt structure as described above and in the regions above the bead region the carcass is not reinforced by reinforcing layers or apexes these regions are comparatively low in stiffness in respect of structure and constituent material and are therefore less resistant to deformation. These regions effect and determine the free balanced profile shape of the tyre.

The tyre is designed so that the radius of curvature CR1 of the shoulder part of the carcass line 11 when the tyre is inflated to a pressure corresponding to 5% of the specified maximum air pressure, as shown by a dotted line in Fig.1. is larger than the other radius CR2 of curvature of the shoulder part in the shape most approximate to a free balanced profile 15 as shown by an alternate long and short dashed line formed when the tyre is under the specified maximum pressure of air. The object of this invention is most advantageously achieved when the ratio CR2/CR1 between the radii of curvatures of both profiles falls within the range from 0.7 to 0.95.

The carcass ply 1 of the radial reinforcement structure is in contact with the bead cores 7 at points f. The length arcuately extending from f to f represents the width of the carcass layer 1 between the bead cores and is determined by the external size of the tyre, the belt layer, and the rubber gauge. Because of the low extensibility or non extensibility of the materials arranged radially i.e. at an angle of 90° with respect to the equatorial plane of the tyre, the above mentioned length is not much varied even when the tyre is inflated with air to the maximum pressure.

Fig.1 shows the profile 12 of the radially expansive surface of the carcass corresponding to the tyre mounted on the rim R, and inflated with air to the specified maximum pressure, and non-loaded. and another profile 11 of the radially expansive surface of the carcass corresponding to the tyre inflated with air to 5% of the specified maximum pressure and non-loaded. The carcass ply is in contact with the bead cores 7 at points f and passes through intersection points X1 and X2 at which the locus S-S' of the equatorial plane of the tyre intersects with the carcass profiles 11 and 12, respectively. The length f-f around the tyre section of the radially expansive surface of the carcass ply 1 is twice as much as that f-x. When the tyre is inflated with air to 100% of the specified maximum pressure, a point C2, on the ply line when it intersects the line N2-N2' of a radial plane through the tread edge point E2 is a distance AC2 from the equatorial plane S-S' and is also spaced from the axis Y-Y by a distance RC2 in the radial direction.

In addition when the tyre is mounted on the specified rim unloaded but inflated with air pressure to 5% of the specified maximum pressure. then the ply profile 11 of the carcass layer is such that the intersecting point C1 of the ply and the line N1-N1' of a radial plane through the tread edge E1 and entending in parallel with the line S-S' of the equatorial plane of the tyre lies radially and axially inside the corresponding point C2 on the radially expansive surface profile 12 of a carcass ply of the tyre put in the above mentioned state but inflated with air to the specified maximum pressure.

The point C1 is spaced from the equatorial plane of the tyre by an axial distance AC1 which is shorter than the equivalent distance AC2 for point C2 and from the rotational axis Y-Y' of the tyre by radial distance RC1 which is shorter than the equivalent distance RC2 for point C2.

Ideally intersection point X2, at which the carcass line 12 when the inflating air pressure is at the maximum intersects with the line S-S' of the equatorial plane. is the same point as the point X1 at which the carcass line 11 shape when the inflating air pressure is equal to 5% of the maximum pressure intersects with the same line S-S'. due to the strong hoop effect exerted by the low-extensibility and stiff cords composing the belt structure 3 arranged in triangular patterns to firmly hold the carcass shape. However. in practice, because of the elasticity of rubber and variations in the angles of final arrangement of cords. some movement occurs and point X2 is forced to be a distance from the rotanical axis Y-Y' of the tyre by a distance RX2 which is 100.5% or under, substantially 100.3. or under, of the radial distance RX2 by which the point X1 is spaced from the above mentioned axis Y-Y'. That is to say, a relation as $RX1 \leqslant RX2 \leqslant 1.005 RX1$ is obtained.

One of the most significant characteristics of this invention is that. in the above described state of the tyre inflated with air to 100% of the specified maximum pressure. a circumferential length $2\pi RC2$ drawn by the point C2 corresponding to the tread edgq E2. is longer than the other circumferential length $2\pi RC1$ drawn by the point C1 when the inflating air pressure is 5% of the specified maximum pressure. The ratio between lengths RC2/RC1 is always greater than RX2 to RX1. That is. the tyre is designed to satisfy the relationship RC2 RC1 > RX2 RX1. In other words of RX1 = RX2 and RC1 = RC2. even when a tyre is inflated then the radial distance from the points C1 and C2 to the rotanical axis Y-Y' of the tyre do not vary, That is the radii of curvature of tread surfaces, too, do not vary.

If RX1 = RX2 and RC1>RC2, then the radial distance between the point C1 and the rotational axis Y-Y' of the tyre is reduced when the tyre is inflated and, therefore, the radius of curvature produces a rounder surface for the tread. In other words, such conditions that RX1 = RX2 and RC1≽RC2, and RC2/RX1≼RV2/RX1 are characteristics of the carcass profile line of tyres depending to the prior art which do not give the advantages of the present invention.

One method of arranging the carcass ply line 11 in the shoulder region before inflation of the tyre to be radially bellow the carcass ply line which approximates to the free balanced profile, i.e. if carcass line 12 produced when the tyre is inflated with air to 100% of the maximum pressure, is to increase the length of the line B1 which is the normal running from the tread edge E1 to the carcass line 11. Thus an increase in the rubber thickness or gauge B1 to lower the carcass line 11 below the carcass line 12. It must, however, be taken into consideration that if the rubber gauge B1 is increased a higher degree of heat is generated in the tyre due to increases in loss of internal energy of rubber, thereby causing a decrease in durability of the tyre in high speed running. The invention provides by a decrease in the radius of curvature TR1 of the tread before inflating the tyre and the increase in the length C1' (will be referred to as the camber height C1' hereinafter) of a perpendicular line extending from a line T-T' touching the equator of the tyre and extending in parallel with the rotanical axix Y-Y' of the tyre towards the tread edge point E1, results in an arrangement of a carcass line 11 which is below the other carcass line 12 without increase in the rubber gauge B1.

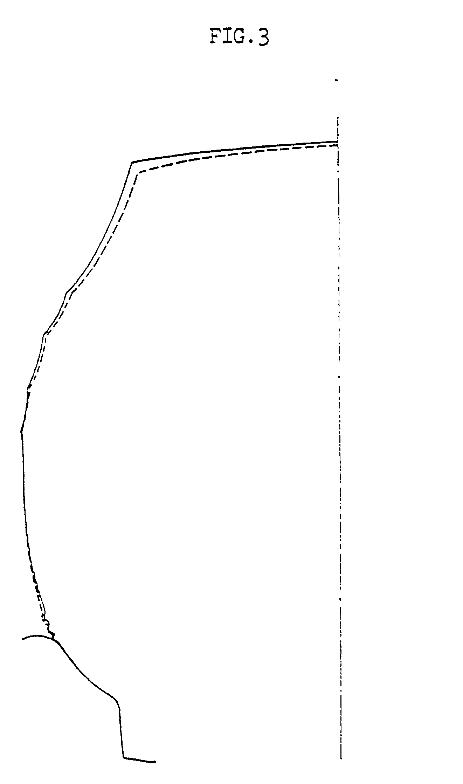

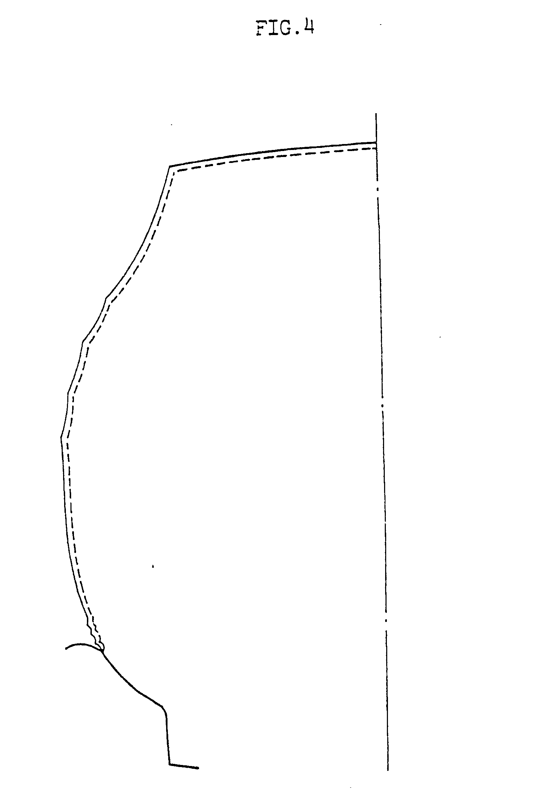

As described above, the carcass radial profile of the tyre, in which the carcass line to be produced with tyre inflation to 5% of the specified maximum air pressure is adpated to extend below another carcass line 12 to be produced with tyre inflation to the above mentioned maximum air pressure, is approximate that of a free balanced profile having the carcass line displaced upwards with increasing tyre inflation, and, therefore, a tyre according to this invention is largely deformed, as shown in Fig.3 and as apparent from an example of a tyre in the size 10.00R20 14PR, at a part including the buttress part extending above a level corresponding to 60% or more the cross-sectional height of the tyre and the tread part. In comparison a tyre as shown in Fig.4 and having a profile according to the prior art is substantially evenly deformed throughout. In Figs.3 & 4, the continuous line indicates the external profile shape of a tyre inflated to the specified maximum internal air pressure (7.25 kg/cm$^2$) and the dotted line indicates the external profile of a tyre inflated to have the internal air pressure of 0.36 kg·cm$^2$), that is, 5% of the specified maximum pressure of 7.25 kg/cm$^2$ both profiles having been obtained by plaster casting. Displacement of the carcass ply line caused by the pressure of air blown into the tyre, that is, variation in the external profile of the tyre exerts influence upon the distribution of tension in the carcass as a matter of course, and, in the case of a tyre according to this invention, tension as well as apparent stiffness in the carcass is high in an area extending from the upper part of the side wall to the buttress and tread part where the degree of deformation is large.

Similarly, because of the larger degree of deformation (CR2-CR1) at both ends of the tread than that (RX2-RX1) at the equatorial plane of the tyre, compressive strain acts on the ground contacting surface of the tread part and increases the transverse stiffness in cooperation with the aforesaid stiffness.

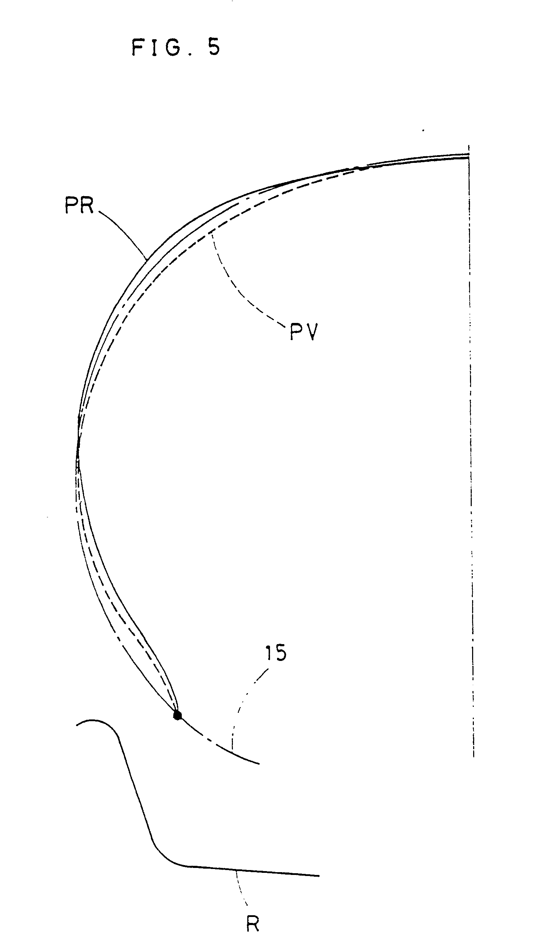

Fig.5 shows the relative position of the carcass line of the conventional tyre (PR) and of a tyre (PV) according to this invention which were all drawn at the time of tyre inflation to 5% air pressure and the standard carcass line (15) at the time of 100% air pressure inflation.

As described above, when the outer diameter of the tyre increases in both shoulder regions of the tread due to inflation pressure the ground contact pressure of the tyre, when loaded, increases against the ground and the temperature rises in both shoulder parts, thereby causing an undesirable decrease in durability of the tyre when subject to high speed running. As a counter-measure thereto, according to the prior art, the depth of the above mentioned vertical main tread groove is reduced to provide a "shallow groove" and in addition a reduced tread gauge, or rubber of low gripping performance is used. However, the life of the tyre is invariably shortened thereby.

The inventor of this invention made it after examining a method of preventing temperature rise at both shoulder parts which is the great barrier to prolongation of the life of a tyre while maintaining a large radius of curvature to flattening the tread.

In other words, as a result of selecting seven items such as the ratio between the surface areas of the cut grooves at the shoulder parts, the shape index (cross-sectional area of loaded tyre free surface area) the pattern transverse stiffness, the pattern circumferential stiffness, the volume of cut groove, the shoulder tread gauge, and the tread radius as factors of temperature rise and examining the correlation between temperatures and the above factors depending on multiple regression analysis, it was shown that "circumferential stiffness" and "volume of cut groove" greatly contribute to temperature rise.

Fig.15 graphically shows the relationship between the pattern circumferential stiffness in the shoulder part and temperature, wherein the lower the circumferential stiffness, the lower the temperature in the shoulder part. Fig.16 shows the relationship between the volume of the cut groove and temperature, wherein, the larger the volume of the cut groove, the lower the temperature, but, as regards an embodiment of this invention, it can be understood that even when the volume of the cut groove is equal to that of the conventional tyre, the resultant temperature is still nearly 20°C lower than that in the conventional tyre.

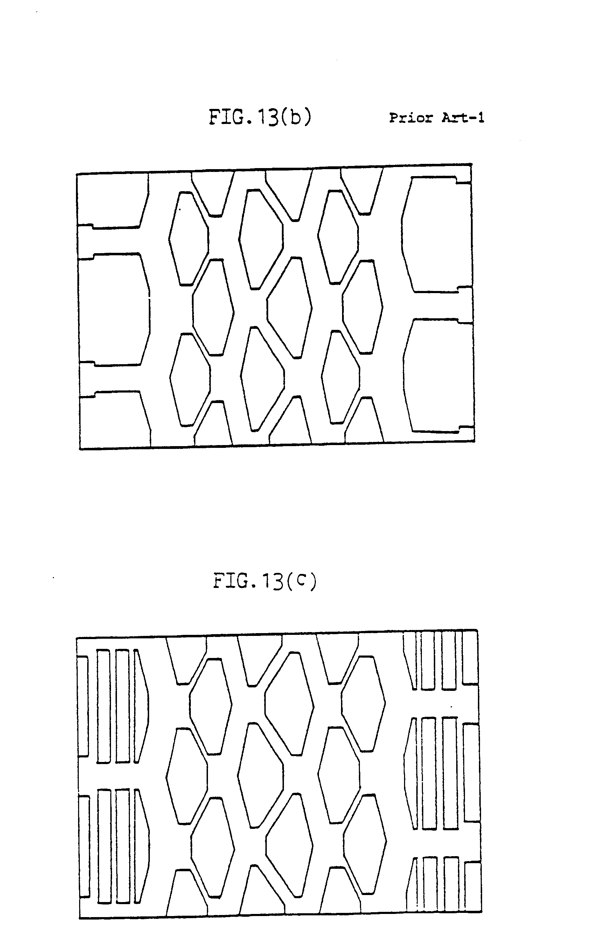

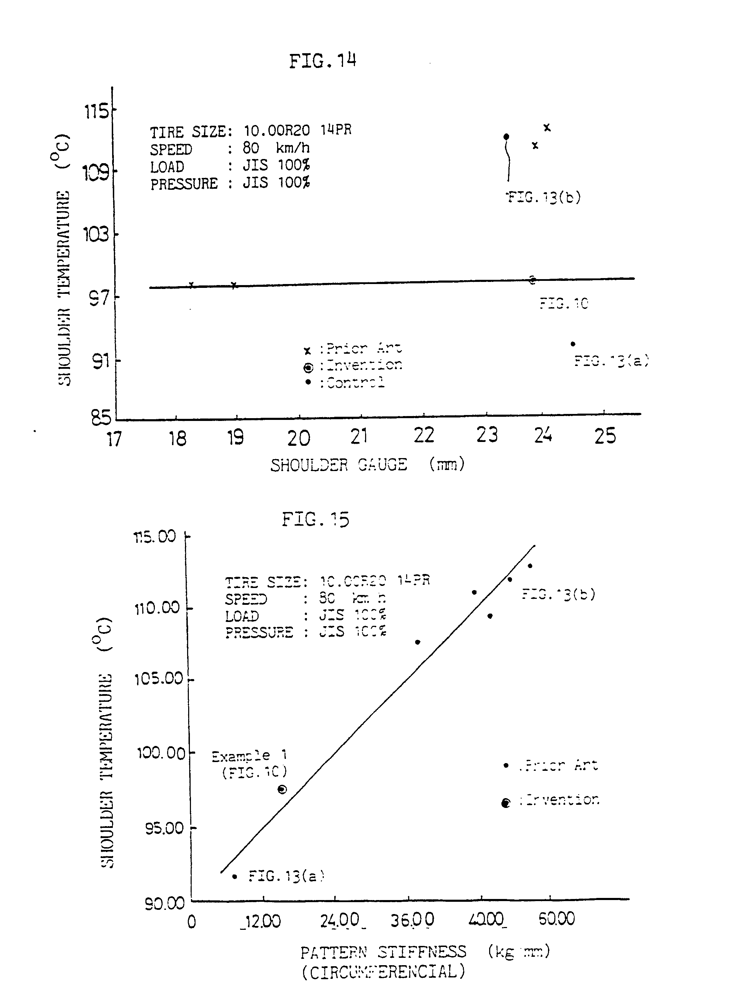

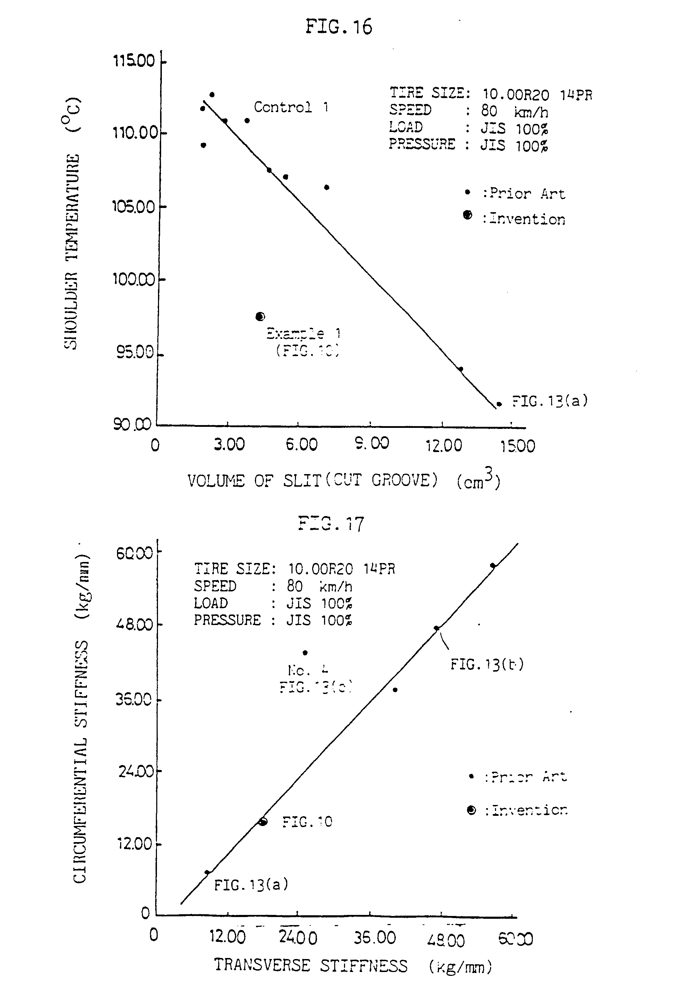

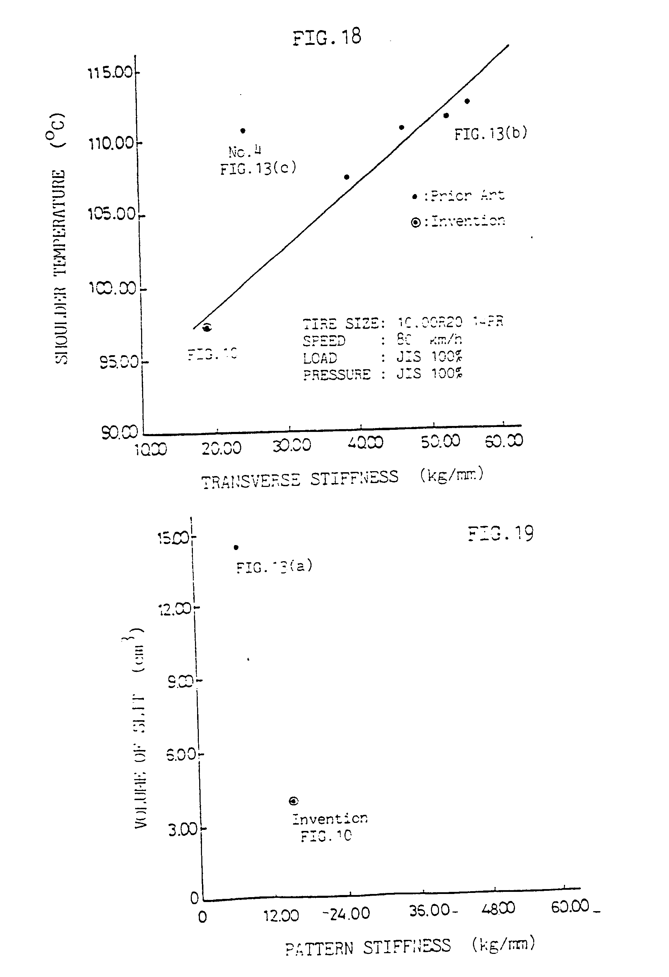

A comparison of transverse stiffness with the circumferential stiffness of the pattern indicates that, as shown in Fig.17, the temperature in the pattern No.4 Fig. 13C) having transverse stiffness lower than circumferential one is 111°C which is not low at all as shown in Fig. 18. Incidentally the circumferential stiffness per pitch of the pattern No. 4 was 44.0 whereas the transverse stiffness was 25.2. From the above fact, it was found that lowering of temperature depends on a reduction of circumferential stiffness rather than transverse one.

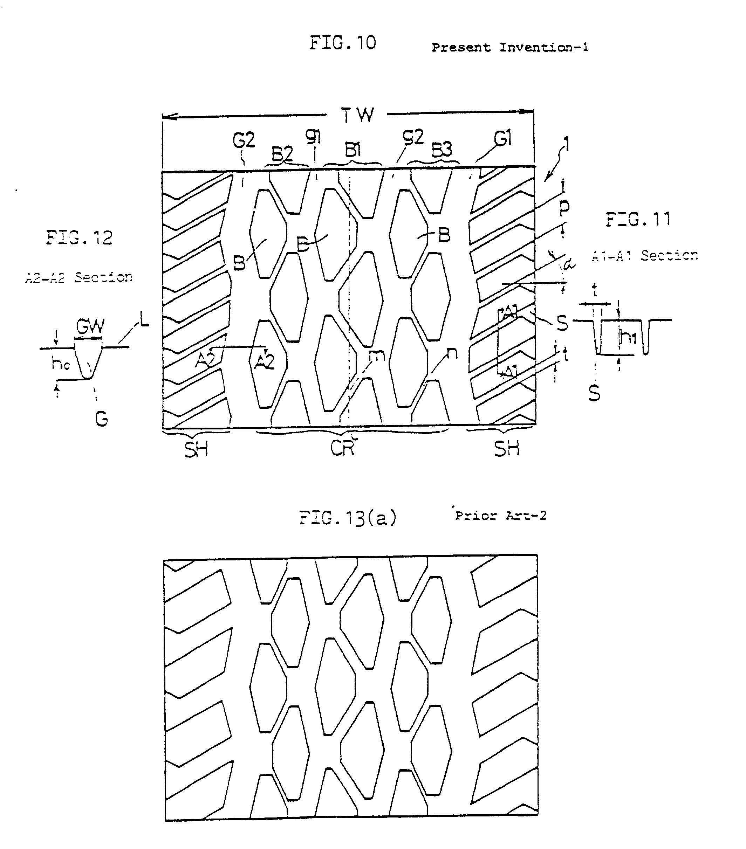

Fig.14 graphically shows the relationship between the tread gauge at the shoulder part and the temperature in the tyre, wherein a temperature rises with increasing tread gauge in the conventional tyre but, in the embodiment of this invention (Fig.10), despite the shoulder gauge of 23.8mm, the temperature of the tyre is as low as that of the conventional tyre having the gauge of 18 to 19mm.

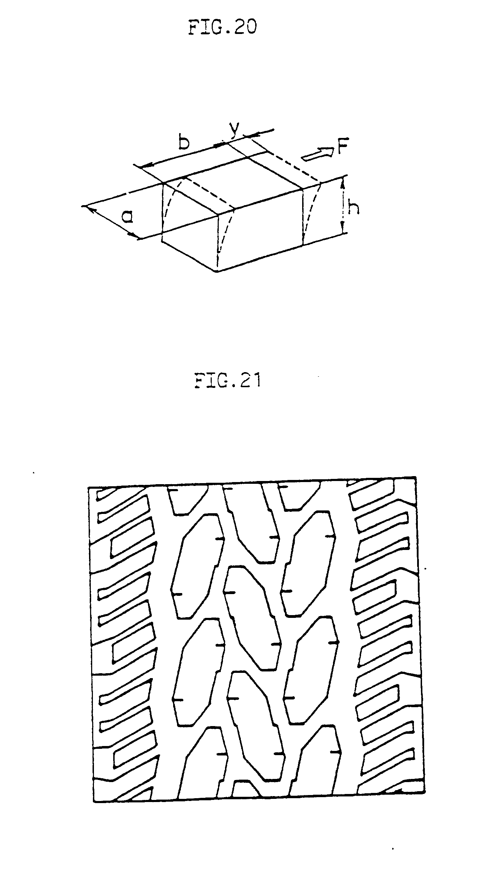

It would be expected that lowering of the stiffness of the pattern depending on pattern effect leads to decrease in resistance of the tyre to wear, however, in this respect, Fig. 19 shows that the values of pattern stiffness of tyres in Fig.10 and 13a are 15.6 and 7.7, respectively, that is, 1:0.5 in terms of ratio, and the volumes of the cut grooves are $4.16cm^3$ and $14.4cm^3$, respectively, i.e. 1:3.5 in ratio. In the pattern shown in Fig.10, the volume cut groove is small (Fig 19) in proportion to the pattern stiffness as compared with that shown in Fig.13(a). That is to say, it has been found that, when reducing pattern stiffness the resistance to wear is reduced with an increase in volume of the cut groove and, therefore, by setting the width t of cut at the shoulder part narrow as in the pattern shown in Fig.10, control over temperature rise and improved resistance to wear are ensured. An appropriate width t of a cut s is 6mm or less, preferably from 1 to 3mm. The volume index of the cut is preferably within the range from 2.5 to 15. An index exceeding 16 results in too large a volume of the cut which accelerates wear of tread rubber and, further, unfavorably generates noise or traps pebbles. Too small an index less than 2.4 degrades wet grip and causes resultant problems in safety of the vehicle. The index of circumferential stiffness is preferable in the range of 30 to 70. However, values such as less than 29 cause the rubber block to tend to chip off and, values, greater than 71 invite problems of generation of heat. The provision of a plurality of cut grooves for adapting the circumferential stiffness index to range from 30 to 70 improves the ground contact performance of the tread and reduces wear of the tyre occurring during slippage, thereby the so-called shoulder wear is markedly reduced or even eliminated.

An example of a pattern designed on the basis of the above findings will now be described with reference to Fig. 10.

The tread comprises a crown part CR defined by circumferentially extending main grooves G1 and G2 centered about the equatorial plane C of the tyre so as to be spaced apart by 30 to 65% of the tread width TW. The grooves G1 and G2 define shoulders outside both sides of the crown part, in which there are circumferentially extending narrow grooves g1 and g2.

Sub-grooves m and n extend between the main grooves G1 and G2 and the narrow grooves g1 and g2 connecting them and thus form rows of blocks B1, B2, and B3 each comprising approximately parallelogrammatic blocks B to form the crown region. In the shoulder region blocks SH lie outside the main grooves G1 and G2, and cuts S are provided in the circumferential direction of the tyre at equal pitches of 15mm each at an angle of 30° with respect to the axial direction of the tyre. The width t and depth h of the cuts are 2mm and 13mm, respectively. The depth of the main grooves G1 and G2 is that of the deep groove type of tyre for example, a depth ranging from 16.6 to 20.6mm for a 10.00R20 tyre. In the present example, the depth is 18.00mm. The width GW of the groove G having a crosssectional shape of U as in Fig.12 is 14.5mm. The narrow grooves g1 and g2 are 18mm deep and 9.5mm wide and sub-groovesm are 5mm wide and 11mm deep. The other sub-groove n is 2mm wide and 9mm deep. In the example No.1 shown in Fig.10 the pattern stiffness index and the cut groove volume index are 64 and 10.5, respectively.

The definition "pattern stiffness" and "volume index" are defined as follows:-

Pattern Stiffness Index

In the shoulder parts,the pattern stiffness, which is the pattern stiffness in contact with ground under specified load and inner pressure, is defined by the following equations:

$$kp = \frac{F}{y} = 1/\left(\frac{h^3}{3EI} + \frac{h}{AG}\right) \quad \cdots \cdots \cdots \quad \text{Equation 1}$$

kp;   Pattern stiffness (kg/mm)

F :   Tangential force at grounding surface (kg)

y:   Variation of pattern (mm)

h:   Pattern depth (mm)

E:   Elastic modules at elongation of tread rubber (kg/mm$^2$)

G:   Shear modules ( = E/3) (kg/mm$^2$)

I:   Secondary moment at block section (mm$^4$ ) I = ab$^{3/12}$ in the block shown in Fig.10

A:   Sectional area of block (mm$^2$)

In the case of an actual pattern, the pattern depth is different from the h1 of cut groove in the shoulder parts, and several number of blocks are adopted, so it is treated as follows:

The pattern stiffness at surface (Kps),

Kps = Kps1 + Kps2 + .... + Kpsn

to use h = h1 in the equation 1;

The pattern stiffness at base tread part (Kpb) is to use h = ho - h1 (Fig.10) in the equation 1;

The total pattern stiffness (Kpt),

$$Kpt = 1/\left(\frac{1}{Kps} + \frac{1}{Kp_b}\right)$$

The pattern stiffness in the case of no subgrooves (Kpo) is to use h = ho in the equation 1; and Circumferential stiffness index of the pattern

$$\frac{Kpt}{Kpo} \quad X \quad 100$$

Volume index of the cut groove

The ratio of the volume of groove to total volume of shoulder part.

$$\text{Volume index of the cut groove} = \frac{\text{Volume of cut grooves in shoulder part}}{\text{Surface area of shoulder part} \times \text{Pattern depth}} \times 100$$

By way of example consider four tyres made for trial. The first tyre provided has a width of pattern and carcass line profile (PV) according to this invention as shown in Fig.5 and a second tyre has a pattern of this invention and carcass line profile (PR) according to the prior art (Example 1 and Control Example 1, respectively) A third tyre with a pattern of the prior art as shown in Fig. 13(b), a carcass line profile (PV) of this invention and a fourth tyre with the pattern of the prior art and the carcass line profile (PR) of the prior art (Control Example 2 and 3, respectively). Various kinds of tests such as tread surface strain, tread cutting resistance to rolling, corneeing force, and comfort in vehicle ride, suitability to high speed running, tread wear, and wet grip performance were performed.

Specifications of the test samples are listed in Table 4.

Table 4

| | Example 1 | Control Example 1 | Control Example 2 | Control Example 3 |
|---|---|---|---|---|
| Tread radius of curvature, (a) air pressure 5% (TR1) | 520 | 560 | 520 | 560 |
| (b) air pressure 100% (TR2) | 650 | 530 | 650 | 530 |
| Carcass line radius at shoulder part | | | | |
| (a) air pressure 5% (CR1) | 110 | 85 | 110 | 85 |
| (b) air pressure 100% (CR2) | 90 | 90 | 90 | 90 |
| Carcass line radius at crown part | | | | |
| (a) air pressure 5% (RX1) | 491.35 | 491.35 | 491.35 | 491.35 |
| (b) air pressure 100% (RX2) | 492.85 | 492.85 | 492.85 | 492.85 |
| Depth ($h_1$) of cut at shoulder part (mm) | 13 | 13 | 5.5 | 5.5 |
| Width (t) of cut at shoulder part (mm) | 2 | 2 | 11.5 | 11.5 |
| Ratio of cut surface area at shoulder part | 0.19 | 0.19 | 0.18 | 0.18 |
| Shape index at shoulder part | 0.44 | 0.44 | 0.72 | 0.72 |
| Pattern transverse stiffness at shoulder part (kg/mm) | 18.6 | 18.6 | 52.7 | 52.7 |
| Pattern circumferential stiffness at shoulder part (kg/mm) | 15.6(64) | 15.6(64) | 53.8(38) | 53.8(94) |
| Volume of cut at shoulder part (cm$^3$) | 4.160(10.5) | 4.160(10.5) | 1.898(4.8) | 1.898(4.8) |
| Thickness of rubber at shoulder part (mm) | 23.9 | 23.9 | 23.5 | 23.5 |
| Depth ($h_o$) of vertically running main groove (mm) | 18.0 | 18.0 | 18.0 | 18.0 |
| Tread pattern | Fig.10 | Fig.10 | Fig.13b | Fig.13b |
| Carcass line profile | Fig. 5 (PV) | Fig. 5 (PR) | Fig. 5 (PV) | Fig. 5 (PR) |

The numeral in parenthesis, ( ), indicates an index.

EP 0 202 788 B1

9

In the tyres, the carcass 1 was composed of one ply of twisted steel cords (7 x 4/0.l75mm) disposed at an angle of 90° with respect to the equatorial plane of the tyre and the belt structure 3 was composed of twisted steel cords (1 x 3/0.20 + 6/0.38 mm). The first belt was disposed at 67° with respect to the equatorial plane of the tyre whereas the second through fourth belts was at 16°.

The belt adjacent to the carcass layer is referred to as the first belt, and succeeding ones as the second, third, and fourth in turn. Component materials belts such as tread rubber and others were common to all belts.

## (Tread surface strain and Depth of cut)

|  | Tread surface strain *2 (%) | Depth of cut *1 (mm) |
| --- | --- | --- |
| Example 1 | -1.4 | 4.0 |
| Control Example 1 | +1.6 | 15.0 |

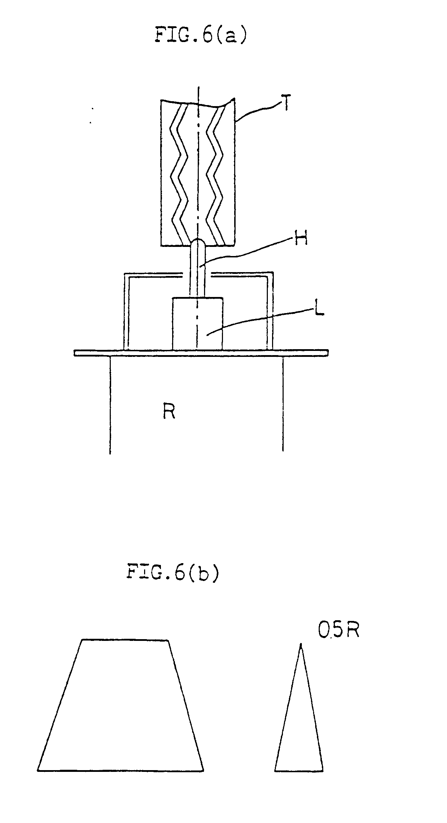

*1 The term "depth of cut" means a depth of a cut produced on the tread when a jig T as shown in Fig.6 is pressed with a certain intensity of force onto a tyre inflated to have the specified internal air pressure.

*2 "Tread surface strain" is a term defined in such a way thatm when a length drawn on the tread surface between scale marks each 10mm long along the direction of the tyres axis increases with inflation of the tyre, tensile strain (+) acts and, when said length decreases, compressive strain (-) acts.

The tyre of this example was found to be excellent in resistance to cut when knowing that compressive strain acts therein.

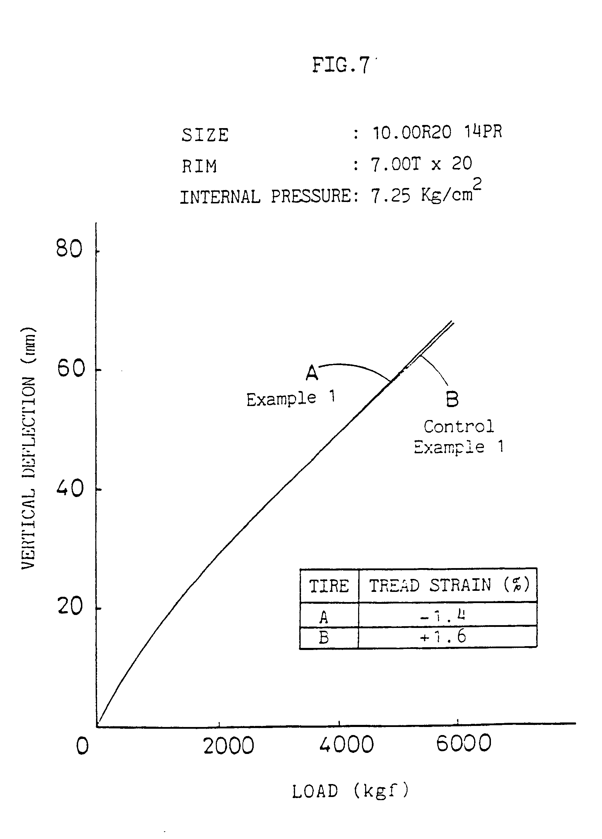

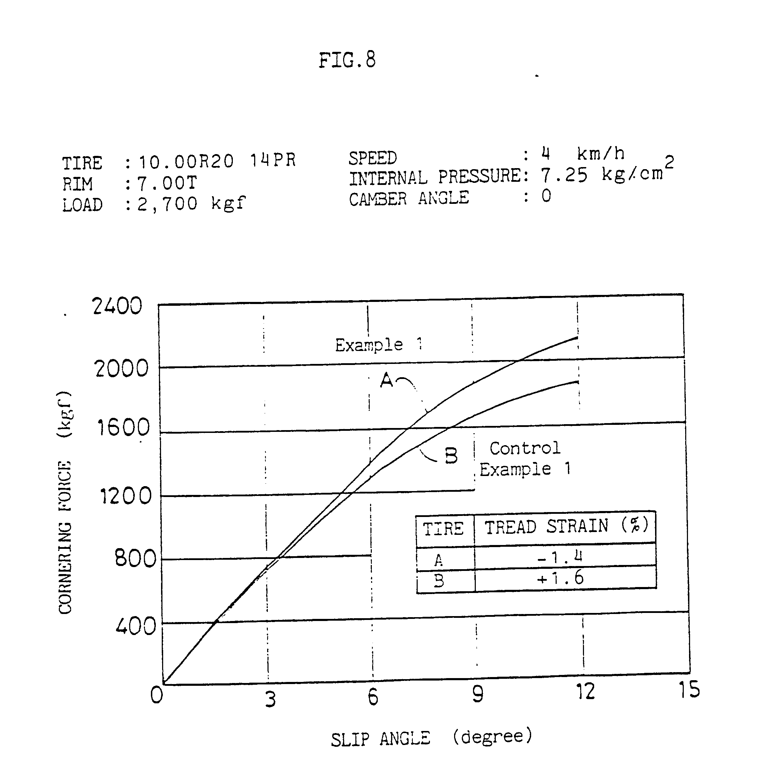

Comfort and stability test were then carried out and the results of the investigations of the vertical spring rate as a scale for evaluating comfort in vehicle ride and stability in driving and about the relation between cornering force and tread surface strain were provided. The results are shown in Fig.7 and 8 and the tyre of Examples 1 of th is invention in which compressive strain acts is nor different in degree of deflection from Control Example 1 in Example 1 in which tensile strain acts but approximately 10% higher in intensity of cornering force. This data shows that high tension of the carcass ply acting on the portion extending from buttress to tread part and compressive strain acting in the direction of the tyre axis provide higher transverse stiffness at the ground contacting surface.

From the above described facts, it can be said that comfort in vehicle ride provided by a tyre having a profile according to this invention is not different, as wil be referred to later again, from that by the conventional tyre but there is great superiority in respect of the stability in driving.

To find the effect of the carcass profile, the intensity of reactive force generated in the rotational axes of tyres of Control Example 1 and Example 1 during running over protrusions in the test course and data as shown in table 3 for comparing two examples with respect to confortableness in riding during joint were obtained.

Table 3 shows the results of the measurements of the reactive force in Example 1 in terms of an index based on the assumption that the index of the reactive force in Control Example 1 is 100, wherein the larger the index, the better the comfort of vehicle ride.

## Table 3

### Comparison of test results of comfortableness in rubber

|  | Speed | Control Example 1 | Example 1 |
|---|---|---|---|
| Vertical reactive force during ride over protrusions | 50 km/h | 100 | 100 |
|  | 80 km/h | 100 | 102 |
| Back-and-forth reactive for during ride over protrusions | 50 km/h | 100 | 101 |
|  | 80 km/h | 100 | 100 |

From Table 3, the tyre of Example 1 was found to be superior to the conventional one providing improved comfort in vehicle ride. The reason for the above fact is that a great deal of flexional deformation inflicted on the tyre when the tyre rides over protrusions on the ground is absorbed in the sidewall parts of the tyre. In the tyre according to the invention, tension in the carcass ply is low in areas extending from positions, at which deformation absorption capacity reaches the maximum and between which the largest width of the tyre lies, to the bead parts on the sidewall portions lower than the above mentioned points, whereby tension distribution in these areas are capable of absorbing flexional deformation comparatively easily.

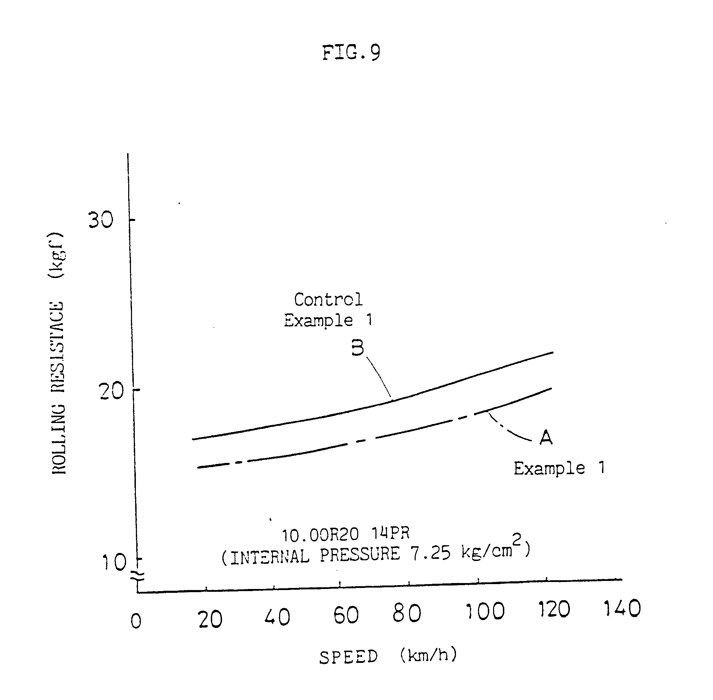

Comparison of the rolling resistance of the tyre of Example 1 according to this invention with that of Control Example 1 of the prior art, as shown in Fig. 9, indicated that the former is 10% or more below the latter and, proportionately, contributes to a reduction in fuel consumption. The reason is that the movement of rubber in the tyre of this invention occurring every revolution of the tyre is smaller than that of the conventional tyre in the areas extending from the ground contacting surface to the buttress parts and energy loss in the tyre is reduced. The same remark as above is applicable to heat generation in the tyre, too.

Rolling resistance is evaluated by the resistance of a tyre during running after the tyre is pressed to the surface of a steel drum of 1.7 m in diameter loaded as specified, after being driven for warming up for about 45 minutes at a speed and with internal pressure as specified.

In view of improved road conditions of these days, importance must be attached to durability in high speed running of a tyre of such kind as above and to test durability in high speed running the following test was performed and the results thereof being shown in Table 5.

## Table 5

|  | Test speed | : Length of time of running |
|---|---|---|
| Example 1 | 130 km/h | : 110 min to failure |
| Control Example 1 | 120 km/h | : 50 min to failure |
| Control Example 2 | 110 km/h | : 100 min to failure |
| Control Example 3 | 100 km/h | : 50 min to failure |

Tyres were driven on the drum type driving tester according to the stepped speed running method on conditions that:

| | |
|---|---|
| Load | : 3,780 kg |
| Initial internal pressure | : 7.25 kg/cm$^2$ |
| Rim | : 7.50 V |

wherein results were evaluated by the level of speed at which the tyre failed due to heat generation and the length of time spent running at the above speed. A tyre of Example 1 of this invention cleared a speed of 130 km/h but a tyre of Control Example 1 could clear only 120 km/h, lower by one order than 130 km/h. Control Example 3 having conventional pattern plus conventional carcass ply showed a lower level of durability (100 km/h). Control Example 2 showed a level of 110 km/h because of the influence of the pattern.

The tyre of this invention designed to be provided with "cut grooves" in the shoulder zones for reducing pattern circumferential stiffness and to cause compressive strain to act upon the tread rubber when the tyre is inflated reduced the amount of movement of the rubber and this controlled the heat generation in the shoulder parts, and provided a "high degree of durability".

As regards resistance of the tread to wear, comparison tests using a truck were performed and the amounts of wear of treads per 1,000 km running were compared by measurements of groove depths after 50,000 km running. As shown in Table 6, the tyre according to this invention demonstrated excellent resistance to wear thanks to low heat generation, more uniform distribution of ground contact pressure and high grip performance.

## Table 6

### Results of tests of resistance to wear using a truck

| | Index of wear of tread * |
|---|---|
| Control Example 1 | 100 |
| Control Example 2 | 100 |
| Control Example 3 | 90 |
| Example 1 | 115 |

* A larger value means a superior performance.
The above ratio may be regarded as a ratio between life span of treads.

Values obtained from comparison of wet grip performance are shown in Table 7.

## Table 7

| | Control Example 1 | Control Example 2 | Control Example 3 | Example 1 |
|---|---|---|---|---|
| Index of wet slip | 110 | 105 | 100 | 115 |

Wet grip performance were observed by comparing the braking distance travelled by the truck driven initially at a speed of 80 km/h on an asphalt-paved wet road, and indicated in terms of an index on the assumption that the index of braking distance of Control Example 3 is 100. In this case, too, the larger the index, the better the performance, and a tyre of example 1 which exhibited a strong braking force is verified to be excellent in wet grip performance which is one important requirements for safety.

In summary, as has been described, this invention provides a well-balanced tyre in which the radially expansive surface profile is expanded radially outwardly at both shoulder parts when the tyre is inflated and the tread pattern circumferential stiffness as well as the index of groove volume is optimised so that resitance to wear, durability in high speed running (low degree of heat generation), resitance to cutting and rolling resistance (low fuel consumption) including wet grip performance and stability in vehicle driving may be advantageously improved without reducing comfort in vehicle ride when subjected to jolting.

## Claims

1. A pneumatic radial ply tyre comprising a carcass reinforced by a carcass ply (1) of radially disposed substantially inextensible reinforcement cords and a tread (5) reinforced by a belt layer (3) comprising at least two layers of plies, each comprising parallel cords, the cords of one cord ply being crosswise to the adjacent ply and laid at an angle of $10° -70°$ to the circumferential direction of the tyre having a pattern formed by a crown part (CR) and a shoulder part (SH), the crown part having' a width of 30 to 65% of the tread width (TW) and being central of the tread and the shoulder parts (SH) being separated from the crown part (CR), each by a circumferentially extending deep groove (G₁,G₂), the shoulder parts (SH) comprising a plurality of narrow cut grooves (S) extending transversely of the tread (5) providing a circumferential stiffness index for the tread pattern in the range 30 to 70, and a volume index for the cut groove in the range of 2,5 to 15 where the circumferential stiffness index is

$$\frac{\text{Total Pattern Stiffness } (Kpt)}{\text{Pattern stiffness with no subgrooves } (Kpo)} \times 100$$

where

$$Kpt = 1 / \left\{ \frac{1}{Kps} + \frac{1}{Kpb} \right\}$$

and Kps is the total pattern stiffness of the surface of the tread and Kpb is the pattern stiffness at the base of the tread where pattern stiffness is

$$Kp = 1 / \left\{ \frac{h^3}{3EI} + \frac{h}{AG} \right\}$$

where

h = pattern depth (mm)
E = elastic modulus at elongation of tread rubber $(Kg\,mm^2)$
G = shear modulus = E 3 $(Kg\,mm^2)$
I = secondary moment at block section $(mm^4)$
A = sectional area of block $(mm^2)$
and where the volume index of the cut groove is

$$\frac{\text{Volume of cut grooves in shoulder part}}{\text{Surface area of shoulder part} \times \text{pattern depth}} \times 100$$

characterised in that the radius TR1 of the radially outer surface of the tread when the tyre is mounted on the rim officially specified for the tyre and inflated to 5% of the specified maximum pressure and the radius TR2 when the tyre is inflated to the maximum pressure satisfy the relationship 1.2 TR2 TR1 1.5, the radius TR1 of the outer surface of the tread increasing with increasing air pressure.

2. A tyre according to claim 1 characterised in that the narrow cut grooves (S) have a width (t) not greater

13

than 6mm.

3.  A tyre according to claim 1 or 2 characterised in that the narrow cut grooves (S) are spaced apart circumferentially of the tyre by 1.1 to 0.1% of the circumference of the tyre at the centre of the tread (5).

4.  A tyre according to claim 2 or 3 characterised by the narrow cut grooves (S) being formed at an angle of 0 to 45° to the axis of the tyre.

5.  A tyre according to any one of claims 1 to 4 characterised by the shoulder parts of the tyre (SH) comprising tread ribs subdivided by the transverse narrow cut grooves (S).

6.  A tyre according to any one of claims 1 to 4 characterised by the shoulder parts of the tyre (SH) comprising tread blocks spaced apart by the transverse narrow cut grooves (S).

7.  A tyre according to any one of claims 1 to 6 characterised by the crown part (CR) of the tread (5) comprising tread ribs.

8.  A tyre according to any one of claims 1 to 6 characterised by the crown part (CR) of the tread (5) comprising spaced apart tread blocks (B).

**Revendications**

1.  Pneumatique à carcasse radiale, comprenant une carcasse armée par une nappe de carcasse (1) formée de câblés d'armature disposés radialement et pratiquement inextensibles et une bande de roulement (5) armée par une nappe (3) de ceinture comprenant au moins deux couches de nappe, comprenant chacune des câblés parallèles, les câblés d'une couche de câblés étant disposés transversalement à la couche adjacente et faisant un angle de 10 à 70° avec la direction circonférentielle du pneumatique, la bande de roulement ayant un dessin formé par une partie bombée (CR) et une partie d'épaulement (SH), la partie bombée ayant une largeur comprise entre 30 et 65 % de la largeur (TW) de la bande de roulement et étant placée au centre de celle-ci et les parties d'épaulement (SH) étant séparées chacune de la partie bombée (CR) par une profonde gorge (G1, G2) disposée circonférentiellement, les parties d'épaulement (SH) comportant plusieurs gorges étroites (S) disposées transversalement à la bande de roulement (5) et donnant un indice de rigidité circonférentielle du dessin de la bande de roulement qui est compris entre 30 et 70 et un indice volumique de la gorge découpée compris entre 2,5 et 15, l'indice de rigidité circonférentielle étant tel que

$$\{[\text{rigidité totale du dessin (Kpt)}]/$$
$$[\text{rigidité du dessin sans gorge secondaire (Kpo)}]\}\times 100$$
$$\text{avec } Kpt = 1/\{(1/Kps) + (1/Kpb)\},$$

Kps étant la rigidité totale du dessin de la surface de la bande de roulement et Kpb étant la rigidité du dessin à la base de la bande de roulement, la rigidité du dessin étant telle que

Kp = 1 {(h³ 3EI) + (h AG)}

h   étant la profondeur du dessin (mm),
E   étant le module d'élasticité à l'allongement du caoutchouc de la bande de roulement (kg mm²),
G   étant le module de cisaillement = E 3 (kg mm²),
I   étant le moment secondaire dans la section des blocs (mm⁴), et
K   étant la section d'un bloc (mm²), et
    l'indice volumique de la gorge découpée est tel que

$$\{(\text{volume des gorges découpées dans la partie d'épaulement})/$$
$$(\text{surface de la partie d'épaulement x}$$
$$\text{profondeur du dessin})] \times 100$$

14

le pneumatique étant caractérisé en ce que le rayon TR1 de la surface radialement externe de la bande de roulement, lorsque le pneumatique est monté sur la jante officiellement spécifiée pour lui, et est gonflé à 5 % de la pression maximale spécifiée, et le rayon TR2 obtenu lorsque le pneumatique est gonflé à la pression maximale, remplissent la condition

$$1,2 \leq TR2/TR1 \leq 1,5$$

le rayon TR1 de la surface externe de la bande de roulement augmentant lorsque la pression de l'air augmente.

2. Pneumatique selon la revendication 1, caractérisé en ce que les étroites gorges découpées (s) ont une largeur (t) qui ne dépasse pas 6 mm.

3. Pneumatique selon la revendication 1 ou 2, caractérisé en ce que les étroites gorges découpées (s) sont espacées suivant la circonférence du pneumatique d'une distance comprise entre 1,1 et 0,1 % de la circonférence du pneumatique au centre de la bande de roulement (5).

4. Pneumatique selon la revendication 2 ou 3, caractérisé en ce que les étroites gorges découpées (s) sont formées avec une inclinaison comprise entre 0 et 45° par rapport à l'axe du pneumatique.

5. Pneumatique selon l'une quelconque des revendications 1 à 4, caractérisé en ce que les parties d'épaulement du pneumatique (SH) comportent des nervures de bande de roulement, subdivisées par les étroites gorges découpées transversalement (s).

6. Pneumatique selon l'une quelconque des revendications 1 à 4, caractérisé en ce que les parties d'épaulement du pneumatique (SH) comportent des blocs de bande de roulement, séparés par d'étroites gorges découpées transversalement (s).

7. Pneumatique selon l'une quelconque des revendications 1 à 6, caractérisé en ce que la partie bombée (CR) de la bande de roulement (5) comporte les nervures de la bande de roulement.

8. Pneumatique selon l'une quelconque des revendications 1 à 6, caractérisé en ce que la partie bombée (CR) de la bande de roulement (5) comportent des blocs espacés (B) de la bande de roulement.

**Ansprüche**

1. Radiallagen-Luftreifen mit einer durch eine Karkasslage (1) aus radial angeordneten, im wesentlichen undehnbaren Verstärkungskorden verstärkten Karkasse und einem Lauf-streifen (5), der durch eine Gürtelschicht (3) verstärkt ist, die mindestens zwei Schichten aus Lagen umfaßt, von denen jede parallele Korde enthält, wobei die Korde einer Kordlage zur benachbarten Lage überkreuzt und mit einem Winkel von 10° bis 70° zur Umfangsrichtung des Reifens gelegt sind, mit einem durch ein Kronenteil (CR) und ein Schulterteil (SH) gebildetes Muster, wobei der Kronenteil eine Breite von 30 bis 65% der Laufstreifenbreite (TW) besitzt und zentral im Laufstreifen liegt und die Schulterteile (SH) von dem Kronenteil (CR) jeweils durch eine sich in Umfangsrichtung erstreckende tiefe Nut (Gl. G2) getrennt sind, die Schulterteile (SH) eine Vielzahl von enggeschnittenen Nuten (S) umfassen, die sich quer zum Laufstreifen (5) erstrecken und einen UmfangssteifheitIndex für das Laufstreifenmuster im Bereich von 30 bis 70 und einen Volumenindex für die geschnittene Nut in dem Bereich von 2,5 bis 15 schaffen, wobei der Umfangssteifheit-Index

$$\frac{\text{Gesamt-Mustersteifheit Kpt}}{\text{Mustersteifheit ohne Nebennuten Kpo}} \times 100$$

ist, wobei

$$Kpt = 1 \; / \; \left\{ \frac{1}{Kps} + \frac{1}{Kpb} \right\}$$

ist und Kps die Gesamtmustersteifheit der Oberfläche des Laufstreifens und Kpb die Mustersteifheit am Grund des Laufstreifens ist, wobei Mustersteifheit ist

15

$$Kp \;=\; 1 \;/\; \left\{ \frac{h^3}{3EI} + \frac{h}{AG} \right\}$$

wobei wiederum

h = Mustertiefe (mm),
E = Elastizitätsmodul des Laufstreifengummis bei Längung (kp/mm²),
G = Schermodul = E/3 (kp/mm²),
I = Sekundärmoment beim Blockquerschnitt (mm⁴),
A = Block-Querschnittsfläche (mm²) sind,
und wobei der Volumenindex der geschnittenen Nut ist

$$\frac{\text{Volumen der geschn. Nut im Schulterteil}}{\text{Oberfläche des Schulterteils x Mustertiefe}} \; x \; 100$$

dadurch gekennzeichnet, daß der Radius TRI der radial äußeren Fläche des Laufstreifens, wenn der Reifen auf die offiziell für den Reifen festgelegte Felge aufgezogen und auf 5% des festgelegten Maximaldrucks aufgepumpt ist und der Radius TR2, wenn der Reifen auf den Maximaldruck aufgepumpt ist, die Beziehung 1,2 ≦ TR2/TR1 ≦ 1,5 erfüllen, wobei der Radius TR1 der Außenfläche des Laufstreifens mit ansteigendem Luftdruck zunimmt.

2. Reifen nach Anspruch 1, dadurch gekennzeichnet, daß die enggeschnittenen Nuten (S) eine Breite (t) von nicht mehr als 6 mm besitzen.

3. Reifen nach Anspruch 1 oder 2, dadurch gekennzeichnet, daß die enggeschnittenen Nuten (S) in Umfangsrichtung des Reifens einen Abstand von 1,1 bis 0,1% des Reifenumfangs in der Mitte des Laufstreifens (5) besitzen.

4. Reifen nach Anspruch 2 oder 3, dadurch gekennzeichnet, daß die eng geschnittenen Nuten (S) mit einem Winkel von 0 bis 45° zur Reifenachse gebildet sind.

5. Reifen nach einem der Ansprüche 1 bis 4, dadurch gekennzeichnet, daß die Schulterteile des Reifens (SH) durch die quer verlaufenden enggeschnittenen Nuten (S) unterteilte Laufstreifenrippen umfassen.

7. Reifen nach einem der Ansprüche 1 bis 6, dadurch gekennzeichnet, daß der Kronenteil (CR) des Laufstreifens (5) Laufstreifenrippen umfaßt.

8. Reifen nach einem der Ansprüche 1 bis 6, dadurch gekennzeichnet, daß der Kronenteil (CR) des Laufstreifens (5) mit Abstand voneinander angeordnete Laufstreifenblöcke (B) umfaßt.

# FIG·1

FIG.2

FIG.3

FIG.4

FIG. 5

FIG.6(a)

FIG.6(b)

FIG.7

SIZE        : 10.00R20 14PR

RIM        : 7.00T x 20

INTERNAL PRESSURE: 7.25 Kg/cm$^2$

| TIRE | TREAD STRAIN (%) |
|------|------------------|
| A    | -1.4             |
| B    | +1.6             |

## FIG.8

TIRE : 10.00R20 14PR     SPEED           : 4  km/h
RIM  : 7.00T             INTERNAL PRESSURE: 7.25 kg/cm$^2$
LOAD : 2,700 kgf         CAMBER ANGLE    : 0

| TIRE | TREAD STRAIN (%) |
|------|------------------|
| A    | -1.4             |
| B    | +1.6             |

FIG.9

FIG. 10     Present Invention-1

FIG. 12

A2-A2 Section

FIG. 11

A1-A1 Section

FIG. 13(a)     Prior Art-2

FIG.13(b)          Prior Art-1

FIG.13(c)

FIG.14

TIRE SIZE: 10.00R20 14PR
SPEED     : 80  km/h
LOAD      : JIS 100%
PRESSURE  : JIS 100%

x :Prior Art
⊚ :Invention
● :Control

FIG.13(b)
FIG.10
FIG.13(a)

SHOULDER TEMPERATURE (°C)
SHOULDER GAUGE (mm)

FIG.15

TIRE SIZE: 10.00R20 14PR
SPEED     : 80  km/h
LOAD      : JIS 100%
PRESSURE  : JIS 100%

FIG.13(b)

Example 1
(FIG.10)

● :Prior Art
⊚ :Invention

● FIG.13(a)

SHOULDER TEMPERATURE (°C)
PATTERN STIFFNESS (kg·mm)
(CIRCUMFERENCIAL)

## FIG. 16

TIRE SIZE: 10.00R20 14PR
SPEED    : 80  km/h
LOAD     : JIS 100%
PRESSURE : JIS 100%

● :Prior Art
◉ :Invention

Control 1

Example 1
(FIG. 10)

FIG. 13(a)

SHOULDER TEMPERATURE (°C)

VOLUME OF SLIT (CUT GROOVE) (cm³)

## FIG. 17

TIRE SIZE: 10.00R20 14PR
SPEED    : 80  km/h
LOAD     : JIS 100%
PRESSURE : JIS 100%

No. 4
FIG. 13(c)

FIG. 13(b)

FIG. 10

FIG. 13(a)

● :Prior Art
◉ :Invention

CIRCUMFERENTIAL STIFFNESS (kg/mm)

TRANSVERSE STIFFNESS (kg/mm)

## FIG. 18

Y-axis: SHOULDER TEMPERATURE (°C)
X-axis: TRANSVERSE STIFFNESS (kg/mm)

No.4
FIG.13(c)

FIG.13(b)

•:Prior Art
⊙:Invention

FIG.10

TIRE SIZE: 10.00R20 1-PR
SPEED    : 80  km/h
LOAD     : JIS 100%
PRESSURE : JIS 100%

## FIG.19

Y-axis: VOLUME OF SLIT (cm³)
X-axis: PATTERN STIFFNESS (kg/mm)

FIG.13(a)

Invention
FIG.10

FIG.20

FIG.21